(19)

**Europäisches Patentamt**
**European Patent Office**
**Office européen des brevets**

(11) **EP 4 583 357 A1**

(12) **EUROPEAN PATENT APPLICATION**
published in accordance with Art. 153(4) EPC

(43) Date of publication:
09.07.2025 Bulletin 2025/28

(21) Application number: 23882944.4

(22) Date of filing: 05.10.2023

(51) International Patent Classification (IPC):
*H02J 7/00* (2006.01)      *H02J 7/04* (2006.01)
*H02J 7/34* (2006.01)      *G06F 3/041* (2006.01)
*G01P 15/00* (2006.01)      *G01C 19/02* (2006.01)
*H01M 10/44* (2006.01)

(52) Cooperative Patent Classification (CPC):
G01C 19/02; G01P 15/00; G06F 3/041;
H01M 10/44; H02J 7/00; H02J 7/04; H02J 7/34

(86) International application number:
PCT/KR2023/015329

(87) International publication number:
WO 2024/090837 (02.05.2024 Gazette 2024/18)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.10.2022  KR 20220141769
24.11.2022  KR 20220159752

(71) Applicant: **Samsung Electronics Co., Ltd.**
**Suwon-si, Gyeonggi-do 16677 (KR)**

(72) Inventors:
• **RYU, Jisu**
**Suwon-si, Gyeonggi-do 16677 (KR)**
• **PARK, Jina**
**Suwon-si, Gyeonggi-do 16677 (KR)**

• **YANG, Jungmin**
**Suwon-si, Gyeonggi-do 16677 (KR)**
• **YOON, Hyunseung**
**Suwon-si, Gyeonggi-do 16677 (KR)**
• **LEE, Sengtai**
**Suwon-si, Gyeonggi-do 16677 (KR)**
• **LIM, Kyuhwan**
**Suwon-si, Gyeonggi-do 16677 (KR)**
• **JANG, Seokmin**
**Suwon-si, Gyeonggi-do 16677 (KR)**
• **JANG, Sungmin**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND ELECTRONIC DEVICE FOR CHARGING BATTERY**

(57) According to an embodiment, an electronic device may comprise: a charging circuit for charging a battery; a motion sensor; a memory; and a processor operatively connected to the charging circuit, the motion sensor, and the memory. The processor may control the charging circuit to perform a charging function for the battery on the basis of a first charging frequency. The processor may change the first charging frequency to a second charging frequency in response to an execution when at least one of a function related to the motion sensor, an instruction related to the motion sensor, and an application including the instruction is executed. The processor may control the charging circuit to perform a charging function for the battery on the basis of the second charging frequency. Various other embodiments may be possible.

EP 4 583 357 A1

# FIG. 4

```
        ┌───────────┐
        │   START   │
        └───────────┘
              │
              ▼
┌─────────────────────────────────────────┐
│ IDENTIFY CHARGING SITUATION OF BATTERY   │
│ BASED ON FIRST CHARGING FREQUENCY AND    │──── 401
│ CHARGING VOLTAGE                         │
└─────────────────────────────────────────┘
              │
              ▼
┌─────────────────────────────────────────┐
│ IDENTIFY EXECUTION OF PROGRAM RELATED TO │
│ MOTION SENSOR IN SITUATION IN WHICH      │──── 403
│ BATTERY IS CHARGING                      │
└─────────────────────────────────────────┘
              │
              ▼
┌─────────────────────────────────────────┐
│ CHANGE FIRST CHARGING FREQUENCY TO       │
│ SECOND CHARGING FREQUENCY IN RESPONSE TO │──── 405
│ EXECUTION OF PROGRAM                     │
└─────────────────────────────────────────┘
              │
              ▼
┌─────────────────────────────────────────┐
│ CHARGE BATTERY BASED ON SECOND CHARGING  │
│ FREQUENCY AND CHARGING VOLTAGE           │──── 407
└─────────────────────────────────────────┘
              │
              ▼
        ┌───────────┐
        │    END    │
        └───────────┘
```

## Description

[Technical Field]

Embodiments of the disclosure relate to a method and an electronic device for charging a battery.

[Background Art]

Portable electronic devices have evolved to perform various functions and use batteries with a limited power capability as power sources for portability and mobility. Because electronic devices perform various functions in a state of being carried by a user, they may consume a large amount of current. Because batteries of electronic devices have a limited power capability, they need to be continuously charged.

The electronic device may receive power from an external electronic device (e.g., charging device) connected by wires and/or wirelessly, and charge a battery of the electronic device based on the supplied power. When charging the battery, the electronic device may increase a charging current so that the battery may be charged at a faster rate.

The above information may be provided as background information for the purpose of assisting understanding of the disclosure. No claim or determination is made as to whether any of the above description is applicable as the prior art in connection with the disclosure.

[Disclosure of Invention]

[Technical Problem]

When charging a battery, the higher power (e.g., voltage and current) supplied to the battery is configured, the faster a battery charging speed may be. However, in a situation in which the current supplied to the battery increases, the electronic device may experience physical vibrations based on a specific charging frequency. For example, in a situation in which the battery is charged based on a specific charging frequency, the electronic device may experience physical vibrations through an inductor disposed in a charging circuit, and identify a situation in which a motion sensor malfunctions due to the physical vibrations.

Various embodiments of the disclosure provide an electronic device for preventing a situation in which a motion sensor malfunctions.

Technical problems to be achieved in this document are not limited to the above-described technical problems, and other technical problems not described will be clearly understood by those of ordinary skill in the art to which this document belongs from the description below.

[Solution to Problem]

According to an embodiment, an electronic device may include a charging circuit for charging a battery, a motion sensor, a memory, and a processor operatively connected to the charging circuit, the motion sensor, and the memory. The processor may control the charging circuit to perform a charging function of the battery based on a first charging frequency. The processor may change the first charging frequency to a second charging frequency in response to execution, when at least one of a function related to the motion sensor, an instruction related to the motion sensor, or an application including the instruction is executed. The processor may control the charging circuit to perform a charging function of the battery based on the second charging frequency.

According to an embodiment, a method of charging a battery may include controlling a charging circuit to perform a charging function of a battery based on a first charging frequency; identifying execution of at least one of a function related to a motion sensor, an instruction related to a motion sensor, or an application including the instruction; changing the first charging frequency to a second charging frequency in response to identifying the execution; and controlling the charging circuit to perform a charging function of a battery 189 based on the second charging frequency.

According to an embodiment, a non-transitory computer readable storage medium (or computer program product) storing one or more programs may be described. According to an embodiment, the one or more programs may include instructions that, when executed by a processor of an electronic device, perform an operation of controlling a charging circuit to perform a charging function of a battery based on a first charging frequency, an operation of identifying execution of at least one of a function related to a motion sensor, an instruction related to a motion sensor, or an application including the instruction, an operation of changing the first charging frequency to a second charging frequency in response to identifying of the execution, and an operation of controlling the charging circuit to perform a charging function of a battery 189 based on the second charging frequency.

[Advantageous Effects of Invention]

In an embodiment, the electronic device can identify a first charging frequency according to charging power in a situation in which a battery is being charged. The electronic device can identify execution of functions and applications related to a motion sensor. For example, the motion sensor may malfunction when charging the battery based on the first charging frequency. In an embodiment, the electronic device can detect an activation operation of the motion sensor when charging the battery based on the first charging frequency, and adjust the first charging frequency to a second charging frequency in response to a situation in which the motion sensor is activated. For example, the second charging frequency may include a charging frequency in a range where the motion sensor does not malfunction in relation to battery charging.

According to an embodiment, in a situation in which the battery is being charged, a charging frequency at which the motion sensor malfunctions can be identified, and by adjusting the identified charging frequency, malfunction of the motion sensor can be prevented. The electronic device can improve sensing accuracy for the motion sensor while maintaining the battery charging. According to an embodiment, a situation in which the motion sensor malfunctions can be prevented.

Effects that can be obtained from the disclosure are not limited to the above-described effects, and other effects not described will be clearly understood by those of ordinary skill in the art to which the disclosure belongs from the description below.

[Brief Description of Drawings]

In connection with the description of the drawings, the same or similar reference numerals may be used for identical or similar components.

FIG. 1 is a block diagram illustrating an electronic device within a network environment according to an embodiment of the disclosure.
FIG. 2 is a block diagram illustrating a power management module and a battery according to an embodiment of the disclosure.
FIG. 3 is a block diagram illustrating an electronic device according to an embodiment of the disclosure.
FIG. 4 is a flowchart illustrating a method of adjusting a charging frequency according to an embodiment of the disclosure.
FIG. 5 is a flowchart illustrating a method of restoring an adjusted charging frequency to an existing charging frequency according to an embodiment of the disclosure.
FIG. 6 is a diagram illustrating a disposition structure of an inductor and a motion sensor included in a charging circuit according to an embodiment of the disclosure.
FIG. 7 is a graph illustrating an operation of adjusting a charging frequency in the case that a sensing value of a motion sensor exceeds a threshold value during a configured time according to an embodiment of the disclosure.

[Mode for the Disclosure]

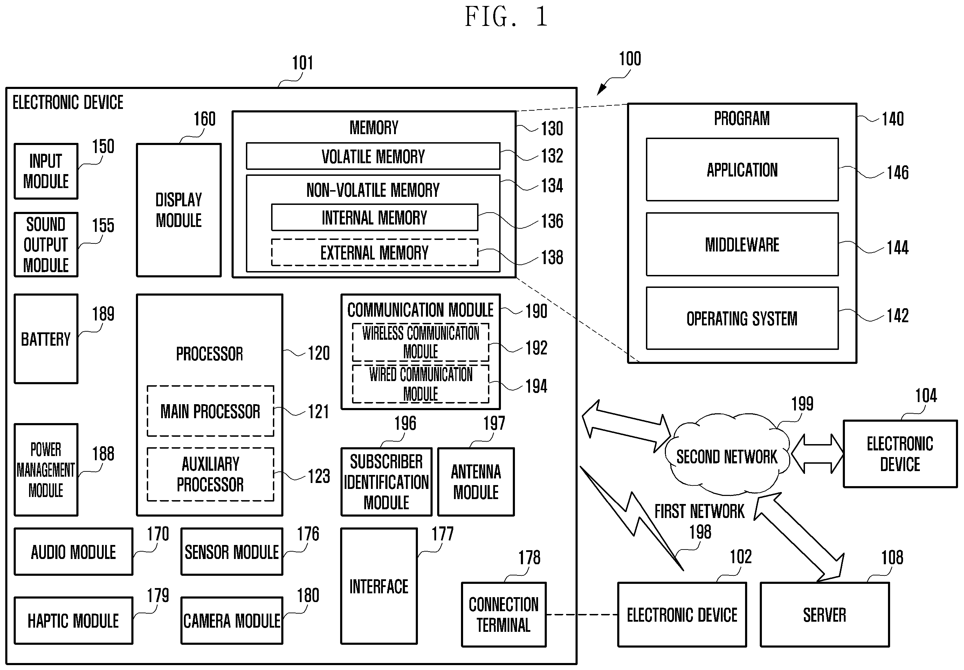

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102)(e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

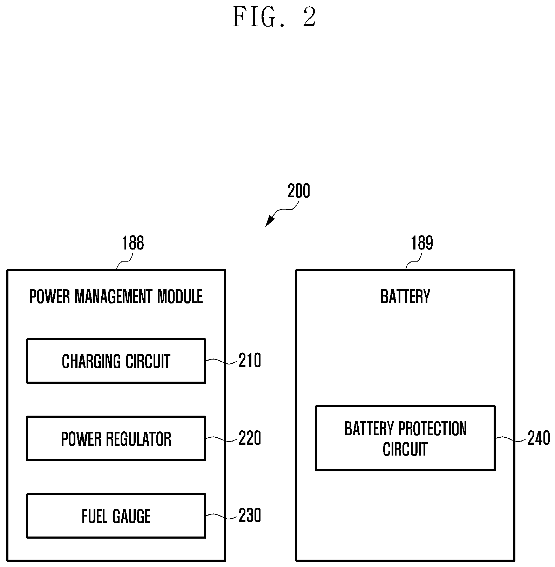

FIG. 2 is a block diagram illustrating a power management module and a battery according to an embodiment of the disclosure.

FIG. 2 is a block diagram 200 illustrating a power management module (e.g., the power management module 188 of FIG. 1) and a battery (e.g., the battery 189 of FIG. 1) according to various embodiments. With reference to FIG. 2, the power management module 188 may include a charging circuit 210, a power regulator 220, or a fuel gauge 230. The charging circuit 210 may charge the battery 189 using power supplied from an external power source for the electronic device 101. According to an embodiment, the charging circuit 210 may select a charging method (e.g., normal charging or rapid charging) based on at least some of a type of the external power source (e.g., power adapter, USB, or wireless charging), a magnitude (e.g., about 20W or more) of power capable of being supplied from the external power source, or properties of the battery 189, and charge the battery 189 using the selected charging method. The external power source may be connected, for example, by wire through a connection terminal (e.g., the connection terminal 178 of FIG. 1) or wirelessly through an antenna module (e.g., the antenna module 197 of FIG. 1).

According to an embodiment, the power regulator 220 may adjust a voltage level or current level of power supplied from the external power source or the battery 189, thereby generating a plurality of powers having different voltages or different current levels. The power regulator 220 may adjust power of the external power source or the battery 189 to a voltage or current level appropriate for each component of the components included in the electronic device 101. According to an embodiment, the power regulator 220 may be implemented in the form of a low drop out (LDO) regulator or a switching regulator.

The fuel gauge 230 may measure use state information of the battery 189 (e.g., capacity, number of charge/-discharge cycles, voltage, or temperature of the battery).

The power management module 188 may determine charging state information (e.g., life, overvoltage, undervoltage, overcurrent, overcharge, over discharge, overheat, short circuit, or swelling) related to charging of the battery 189 based at least in part on the measured use state information, for example, using the charging circuit 210, the voltage regulator 220, or the fuel gauge 230. The power management module 188 may determine whether the battery 189 is in an abnormal state or a normal state based at least in part on the determined charging state information, and in the case that it is determined that the battery is in an abnormal state, the power management module 188 may adjust charging of the battery 189 (e.g., reduce the charging current or voltage, or stop charging). According to an embodiment, at least some functions of functions of the power management module 188 may be performed by an external control device (e.g., the processor 120 of FIG. 1).

The battery 189 may include, for example, a battery protection circuit module (PCM) 240. The PCM 240 may perform various functions (e.g., pre-cut function) for preventing performance degradation or damage of the battery 189. The PCM 240 may additionally or alternatively be constituted as at least a part of a battery management system (BMS) for performing cell balancing, capacity measurement of the battery, charge/discharge number measurement, temperature measurement, or voltage measurement.

According to an embodiment, at least a part of the use state information or the charging state information of the battery 189 may be measured using a corresponding sensor (e.g., temperature sensor) among the fuel gauge 230, the power management module 188, or the sensor module 176. In this case, according to an embodiment, the corresponding sensor (e.g., temperature sensor) among the sensor modules 176 may be included as a part of the PCM 240 or may be disposed near the battery 189 as a separate device.

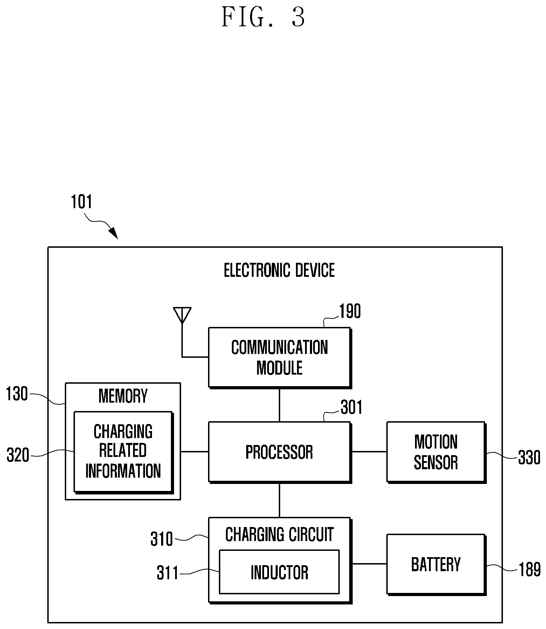

FIG. 3 is a block diagram illustrating an electronic device according to an embodiment of the disclosure.

An electronic device 101 of FIG. 3 may be at least partially similar to the electronic device 101 of FIG. 1 or may further include other components of the electronic device 101. A charging circuit 310 of FIG. 3 may be at least partially similar to the charging circuit 210 included in the power management module 188 of FIG. 2 or may further include other components of the charging circuit 210.

With reference to FIG. 3, the electronic device (e.g., the electronic device 101 of FIG. 1) may include a processor 301 (e.g., the processor 120 of FIG. 1), a memory (e.g., the memory 130 of FIG. 1), a charging circuit 310 (e.g., the charging circuit 210 of FIG. 2), a battery (e.g., the battery 189 of FIG. 1), a communication module (e.g., the communication module 190 of FIG. 1), and/or a motion sensor 330. Charging related information 320 may be stored in the memory 130. According to an embodiment, the electronic device 101 may identify a first charging frequency corresponding to a situation in which the motion sensor 330 malfunctions based on the charging related information 320 stored in the memory 130. Using the identified first charging frequency, in a situation in which the battery 189 is being charged, the electronic device 101 may identify execution of a program related to the motion sensor 330 (e.g., an activation operation of the motion sensor 330) and change the first charging frequency to the second charging frequency in response to the execution of the program. According to an embodiment, the electronic device 101 may change the charging frequency in response to the execution of the program related to the motion sensor 330 and prevent malfunction of the motion sensor 330.

According to an embodiment, the processor 301 of the electronic device 101 may execute a program (e.g., the program 140 of FIG. 1) stored in the memory 130 to control other components (e.g., hardware and/or software components) of the electronic device 101 and/or an external electronic device 201, and perform various data processing and/or operations. According to an embodiment, the processor 301 may include a control circuit of a power management module (e.g., the power management module 188 of FIG. 1, a power management integrated circuit (PMIC)) that supplies power to the electronic device 101. According to an embodiment, the processor 301 may be operatively, functionally, and/or electrically connected to the memory 130, the charging circuit 310, the battery 189, the communication module 190, and/or the motion sensor 330.

According to an embodiment, the memory 130 may store charging related information 320 including a charging voltage, a charging current, and a charging frequency in relation to charging of the battery 189. For example, the charging related information 320 may include information related to a charging frequency corresponding to a supplied charging voltage and charging current in a situation in which the battery 189 of the electronic device 101 is being charged. For example, the charging related information 320 may include a charging frequency representing the maximum battery charging efficiency when charging the battery 189 according to the first charging voltage. The charging related information 320 may include a first charging frequency at which a malfunction of the motion sensor 330 occurs when charging the battery 189 according to the first charging voltage.

According to an embodiment, in the case that the battery 189 of the electronic device 101 is charged based on the first charging frequency, a physical vibration may occur in at least one component disposed in the charging circuit 310 (e.g., the charging circuit 210 of FIG. 2, a power management integrated circuit (PMIC) included in a printed circuit board (PCB)) of the electronic device 101. For example, an inductor 311 may be connected to an LX terminal of a switch node disposed in the charging circuit 310. For example, in a situation in which the battery 189 is charged at a specific frequency, the inductor 311 physically vibrates, and due to the physical vibration generated in the inductor 311, a physical vibration may occur at least partially in the charging circuit 310. According to an embodiment, the charging circuit 310 may include an inductor 311 and a motion sensor 330, and due to a limited disposition structure, the inductor 311 and the motion sensor 330 may be disposed relatively close. For example, the motion sensor 330 may malfunction based on vibrations generated in the inductor 311.

According to an embodiment, in a design process, the electronic device 101 may store charging related information 320 generated based on a charging voltage, charging current, and charging frequency for efficient charging of the battery 189 in the memory 130. For example, the electronic device 101 may identify a charging frequency at which physical vibrations of a level in which the motion sensor 330 malfunctions occur, and store the identified charging frequency in the charging related information 320. The charging related information 320 may be stored in the memory 130 in the form of a look up table including experimental data related to the charging voltage, charging current, and charging frequency.

According to an embodiment, in a situation in which the battery 189 is charged based on the first charging frequency, the electronic device 101 may activate the motion sensor 330 to measure a first sensing value of the motion sensor 330. For example, in the case that the measured first sensing value exceeds a preconfigured threshold value, the electronic device 101 may identify a state in which the motion sensor 330 is malfunctioning. For another example, in the case that the measured first sensing value exceeds a preconfigured threshold value, the electronic device 101 may identify a state in which the motion sensor 330 is operating normally. According to an embodiment, the charging related information 320 may include a first charging frequency at which the motion sensor 330 malfunctions and a second charging frequency at which the motion sensor 330 operates normally. According to an embodiment, the charging related information 320 is not limited to specific data and may include various experimental data tested based on a design structure of the charging circuit 310 and a disposition structure between the inductor 311 and the motion sensor 330.

According to an embodiment, the charging circuit 310 may receive charging power from an external power source (e.g., power adapter, USB, or wireless charging) and include a circuit for charging the battery 189 using the supplied charging power. For example, in the case that a voltage of charging power is lower than a designated target voltage value, the charging circuit 310 may charge the battery 189 based on a constant current (CC), and in the case that a voltage of charging power is higher than or equal to a designated target voltage value, the charging circuit 310 may charge the battery 189 based on a constant voltage (CV). The charging circuit 310 may include various charging related elements for charging the battery 189.

According to an embodiment, the electronic device 101 may charge the battery 189 based on the configured charging voltage and the configured charging current. For example, in a situation in which the battery 189 is charged using the configured charging voltage and the configured charging current, a charging frequency representing optimal charging efficiency may be preconfigured. For example, in the case that the charging voltage and the charging current are configured to specific values, charging efficiency for the battery 189 may be determined based on the charging frequency. For example, the charging related information 320 may include a charging voltage, a charging current, and/or a charging frequency. For example, in the case that adaptive fast charging (AFC) (e.g., fast charging of about 15W) with a charging voltage of about 9V is performed, the processor 120 of the electronic device 101 may charge the battery 189 through the inductor 311 of the charging circuit 310 based on the first charging frequency (e.g., about 832KHz). For example, the inductor 311 may be disposed between the charging circuit 310 and the battery 189 and function as a component that charges a charging current or outputs a charging voltage. In a situation in which the battery 189 is charged based on the first charging frequency, a physical vibration corresponding to the first charging frequency may occur in the inductor 311 connected to a switch node of the charging circuit 310. The physical vibration generated in the inductor 311 may at least partially induce a vibration in the charging circuit 310 and at least partially induce a vibration in a printed circuit board (PCB) including the charging circuit 310. The motion sensor 330 for detecting a movement of the electronic device 101 may be at least partially disposed in the PCB. According to an embodiment, the physical vibration generated in the inductor 311 may be transferred to the motion sensor 330. For example, the motion sensor 330 may measure a sensing value according to the physical vibration, and malfunction due to the physical vibration.

According to an embodiment, the motion sensor 330 may include an acceleration sensor and/or a gyro sensor. For example, the motion sensor 330 may detect a movement according to a state (e.g., posture, location, position) of the electronic device 101. For example, the motion sensor 330 may be at least partially disposed on the PCB and detect vibration and shaking of the PCB.

According to an embodiment, in the case that the battery 189 is charged based on AFC charging (e.g., fast charging of about 15W) with a charging voltage of about 9V, the processor 120 of the electronic device 101 may configure a first charging frequency (e.g., about 832 KHz) based on the charging related information 320 and perform a charging function according to the first charging frequency. When the charging function according to the first charging frequency is performed, a physical vibration may occur in the inductor 311 connected to a switch node LX of the charging circuit 310. For example, the physical vibration generated in the inductor 311 may be transferred to a printed circuit board (PCB) including the charging circuit 310 and at least partially affect the motion sensor 330 through the PCB. For example, in a situation in which the motion sensor 330 is activated (e.g., a situation in which a program or application related to the motion sensor 330 is executed), the motion sensor 330 may malfunction due to a physical vibration generated in the inductor 311.

According to an embodiment, in a situation in which the battery 189 is charged based on AFC charging (e.g., fast charging of about 15W) with a charging voltage of about 9V, the processor 120 may identify a first charging frequency (e.g., about 832 KHz) at which the motion sensor 330 malfunctions based on the charging related information 320. The processor 120 may change the first charging frequency (e.g., about 832KHz) to a second charging frequency (e.g., about 1 MHz) in response to the execution of a program (e.g., application) related to the motion sensor 330. For example, the second charging frequency may include a charging frequency having relatively lower charging efficiency than that of the first charging frequency. According to an embodiment, second charging efficiency of charging the battery 189 based on the second charging frequency may be relatively lowered by about 0.15% compared to first charging efficiency of charging the battery 189 based on the first charging frequency. Using Equation 1, a relative degradation value (e.g., path loss value) of charging efficiency may be calculated.

[Equation 1]

$$\text{Resistance (R) calculated by path loss(W)} = (\text{output current})^2 * \text{efficiency}$$

According to an embodiment, in the case that the charging frequency is changed from the first charging frequency to the second charging frequency, the time required to full charge of the battery 189 may increase by about 1 minute. According to an embodiment, in order to prevent malfunction of the motion sensor 330, the electronic device 101 may change the first charging frequency to the second charging frequency.

According to an embodiment, the charging frequency may be independently determined based on a register value transferred to the charging circuit 310 regardless of a charging voltage or a charging current. For example, the charging frequency may affect charging efficiency, and in a situation in which the battery 189 is charged using a specific charging voltage and a specific charging current, the charging frequency may include a first charging frequency having highest charging efficiency and a second charging frequency having relatively lower efficiency than that of the first charging frequency, but having high efficiency. According to an embodiment, when charging based on the first charging frequency, the motion sensor 330 may malfunction, and when charging based on the second charging frequency, the motion sensor 330 may operate normally.

According to an embodiment, in the case that a program related to the motion sensor 330 is executed in a state of performing a charging operation based on the first charging frequency, the electronic device 101 may change the first charging frequency to the second charging frequency. Even if charging efficiency is relatively low, in order to prevent malfunction of the motion sensor 330, the electronic device 101 may change the first charging frequency to the second charging frequency.

According to an embodiment, the electronic device (e.g., the electronic device 101 of FIG. 1 and/or FIG. 3) may include a charging circuit (e.g., the charging circuit 310 of FIG. 3) for charging the battery (e.g., the battery 189 of FIG. 1 and/or FIG. 3), a motion sensor (e.g., the motion sensor 330 of FIG. 3), a memory (e.g., the memory 130 of FIG. 1 and/or FIG. 3), and a processor (e.g., the processor 301 of FIG. 3) operatively connected to the charging circuit 310, the motion sensor 330, and the memory 130. The processor 301 may control the charging circuit 310 to perform a charging function of the battery 189 based on a first charging frequency. When at least one of a function related to the motion sensor 330, an instruction related to the motion sensor 330, or an application including an instruction is executed, the processor 301 may change the first charging frequency to a second charging frequency in response to the execution. The processor 301 may control the charging circuit 310 to perform a charging function of the battery 189 based on the second charging frequency.

According to an embodiment, the processor 301 may receive charging power for charging the battery 189 from an external electronic device connected to the electronic device 101. The processor 301 may identify a charging voltage and charging current corresponding to the received charging power based on the charging related information 320 stored in the memory 130. The processor 301 may determine the first charging frequency based on the identified charging voltage and charging current.

According to an embodiment, the charging related information 320 may include at least one of charging power, a charging voltage and charging current determined based on the charging power, or at least one charging frequency determined based on the charging voltage and charging current.

According to an embodiment, among at least one charging frequency stored in the memory 130, the first charging frequency may include a charging frequency representing highest charging efficiency in a situation in which the battery 189 is charged based on the identified charging voltage and charging current.

According to an embodiment, among at least one charging frequency stored in the memory 130, the second charging frequency may include a charging frequency representing relatively lower charging efficiency than that of the first charging frequency.

According to an embodiment, the processor 301 may identify termination of the function and the application in a state of performing a charging function based on the second charging frequency. The processor 301 may change the second charging frequency to the first charging frequency in response to the termination of the function and the application. The processor 301 may charge the battery 189 based on the first charging frequency.

According to an embodiment, the electronic device 101 may further include an inductor 311 at least partially disposed in a substrate member in which the motion sensor 330 is disposed and related to a charging function. The inductor 311 may generate a physical vibration in response to performing the charging function based on the first charging frequency.

According to an embodiment, the motion sensor 330 may include an acceleration sensor and a gyro sensor. The processor 301 may identify a sensing value of the motion sensor 330 corresponding to the physical vibration generated through the inductor 311 using the motion sensor 330.

According to an embodiment, when performing a charging function based on the first charging frequency, the processor 301 may identify a first sensing value based on the motion sensor 330. The processor 301 may identify whether the identified first sensing value exceeds a configured threshold value. In the case that the identified first sensing value exceeds a configured threshold value, the processor 301 may change the first charging frequency to the second charging frequency.

According to an embodiment, when performing a charging function based on the second charging frequency, the processor 301 may identify a second sensing value based on the motion sensor 330. The processor 301 may identify whether the identified second sensing value remains a configured threshold value or less during a configured time. In the case that the identified second sensing value remains a configured threshold value or less, the processor 301 may change the second charging frequency to the first charging frequency.

According to an embodiment, in the case of receiving charging power from a terminal adapter (TA) connected to the electronic device 101, the processor 301 may perform a charging function based on the first charging frequency. In the case of receiving charging power from an auxiliary battery connected to the electronic device 101, the processor 301 may perform a charging function based on the second charging frequency.

According to an embodiment, the processor 301 may perform a fast charging function of about 15W based on one of the first charging frequency and the second charging frequency.

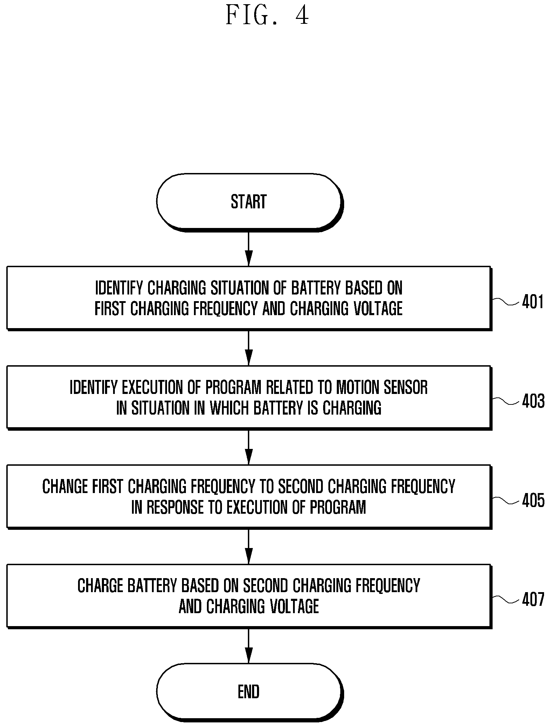

FIG. 4 is a flowchart illustrating a method of adjusting a charging frequency according to an embodiment of the disclosure.

Hereinafter, in embodiments, the respective operations may be performed sequentially, but are not necessarily performed sequentially. For example, the order of the respective operations may be changed, and at least two operations may be performed in parallel.

An electronic device 101 of FIG. 4 may be at least partially similar to the electronic device 101 of FIG. 1 or may further include other components of the electronic device 101.

According to an embodiment, the electronic device 101 may charge a battery (e.g., the battery 189 of FIG. 3) based on a configured charging voltage and a configured charging current in a state of receiving charging power from an external device (e.g., charging device). For example, the electronic device 101 may be in a state in which an external charging device supporting adaptive fast charging (AFC) (e.g., fast charging of about 15W) with a charging voltage of about 9V is to be connected. The electronic device 101 may be in a state of charging the battery 189 based on charging power supplied from the external charging device and a first charging frequency. For example, the first charging frequency may include a charging frequency (e.g., about 832 KHz) representing the maximum charging efficiency based on the configured charging voltage and the configured charging current. According to an embodiment, in a process of performing a charging (e.g., fast charging) operation through an external charging device, the electronic device 101 may configure a first charging frequency (e.g., about 832KHz) having relatively high charging efficiency, and charge the battery 189 based on the first charging frequency.

In operation 401, the processor 301 of the electronic device 101 may identify a charging situation of the battery 189 based on the first charging frequency and the charging voltage. For example, the processor 301 may identify the configured charging voltage and the first charging frequency based on charging related information 320 stored in the memory (e.g., the memory 130 of FIG. 3), and identify a situation of charging the battery 189 based on the charging voltage and the first charging frequency.

In operation 403, the processor 301 may identify execution of a program related to the motion sensor (e.g., the motion sensor 330 of FIG. 3) in a situation of charging the battery 189 based on the first charging frequency. For example, the program related to the motion sensor 330 may include at least one of a function related to the motion sensor 330, an instruction related to the motion sensor 330, or an application including the instruction. In operation 403, the processor 301 may be in a situation in which the motion sensor 330 is at least partially utilized.

According to an embodiment, the processor 301 may identify a physical vibration occurring in the charging circuit (e.g., the charging circuit 310 of FIG. 3) according to the first charging frequency and the configured charging voltage based on charging related information 320 stored in the memory 130. According to an embodiment, the charging circuit 310 may include a circuit for charging the battery 189 using charging power provided from an external charging device. The charging circuit 310 may include various charging related elements for charging the battery 189. For example, the charging circuit 310 may include a power management integrated circuit (PMIC), and an inductor (e.g., the inductor 311 of FIG. 3) may be in a state electrically connected to a switch node LX included in the charging circuit 310. For example, the charging circuit 310 may include a circuit in which the switch node LX and the inductor 311 are at least partially disposed. According to an embodiment, in the case that the electronic device 101 performs a charging function based on the first charging frequency, a physical vibration may occur through the inductor 311 connected to the switch node LX. For example, the vibration generated through the inductor 311 may affect the charging circuit 310 and at least partially affect a printed circuit board (PCB) including the charging circuit 310. According to an embodiment, in a situation in which the electronic device 101 charges the battery 189 based on the first charging frequency, a physical vibration (e.g., first vibration intensity) may occur through the inductor 311 included in the charging circuit 310, and the motion sensor 330 may malfunction due to the physical vibration. For example, the motion sensor 330 may detect the first vibration intensity based on the first charging frequency.

In operation 403 (e.g., a situation in which the motion sensor 330 is utilized in response to the execution of a program related to the motion sensor 330), the motion sensor 330 may be affected in a sensing function thereof by a physical vibration (e.g., first vibration intensity) generated based on the inductor 311. For example, a sensing value identified through the motion sensor 330 may be an error value including a vibration value related to the first vibration intensity. According to an embodiment, the electronic device 101 may change the charging frequency, thereby reducing the vibration generated in the inductor 311 and reducing malfunction of the motion sensor 330.

In operation 405, the processor 301 may change the first charging frequency to the second charging frequency in response to the execution of a program (e.g., game related program and map related program) related to the motion sensor 330. The processor 301 may change the first charging frequency to the second charging frequency based on the charging related information 320 stored in the memory 130. For example, the first charging frequency may include a charging frequency representing the maximum charging efficiency through experiments (e.g., tests), and be stored in the charging related information 320 in a design process of the electronic device 101. For example, the second charging frequency may include a charging frequency having relatively lower charging efficiency than that of the first charging frequency, but representing high charging efficiency through experiments (e.g., tests). According to an embodiment, in a situation in which the battery 189 is charged based on the second charging frequency, a physical vibration (e.g., second vibration intensity) generated through the inductor 311 included in the charging circuit 310 may be lower or weaker than a physical vibration (e.g., first vibration intensity) based on the first charging frequency. For example, the motion sensor 330 may not detect the second vibration intensity based on the second charging frequency. The second vibration intensity may be lower than a threshold value detectable through the motion sensor 330. The processor 301 may change a register value transmitted to the charging circuit 310, thereby changing the first charging frequency to the second charging frequency. The second charging frequency may include a charging frequency having relatively lower charging efficiency compared to the first charging frequency. For example, the charging frequency may be changed independently regardless of a configured charging voltage and a configured charging current.

In operation 407, the processor 301 may charge the battery 189 based on the second charging frequency and the configured charging voltage. According to an embodiment, the electronic device 101 may charge the battery 189 based on the second charging frequency, even if charging efficiency of the second charging frequency is relatively lower than that of the first charging frequency, under the condition that the motion sensor 330 does not malfunction.

According to an embodiment, the electronic device 101 may charge the battery 189 based on charging power (e.g., AFC charging of about 9V, fast charging of about 15W) supplied from the external charging device. In a design process of the electronic device 101, charging related information 320 corresponding to the battery 189 of the electronic device 101 may be stored in the memory 130. For example, the processor 301 may identify a charging voltage, charging current, and charging frequency corresponding to the charging power based on the charging related information 320, and determine a first charging frequency representing relatively high charging efficiency. For example, the processor 301 may determine about 832 KHz representing the maximum charging efficiency as the first charging frequency upon AFC charging (e.g., fast charging of about 15W) of a charging voltage of about 9V, and charge the battery 189 based on about 832KHz. The processor 301 may charge the battery 189 based on the determined first charging frequency.

According to an embodiment, in a situation in which the battery 189 is being charged based on the determined first charging frequency (e.g., about 832KHz), the processor 301 may identify execution of a program related to the motion sensor 330. For example, in a state in which a gyro sensor (e.g., 6-axis sensor, 6-axis gyro acceleration sensor) included in the motion sensor 330 is pre-activated, the processor 301 may detect a movement (e.g., motion) of the electronic device 101 using the gyro sensor in response to execution of the program related to the motion sensor 330. As another example, when a program related to the motion sensor 330 is executed, the motion sensor 330 may be at least partially activated and detect a movement (e.g., motion) of the electronic device 101. According to an embodiment, when charging the battery 189 based on the first charging frequency (e.g., about 832KHz), a physical vibration may occur in the inductor 311 connected between the charging circuit 310 and the battery 189. For example, the inductor 311 may at least partially generate a physical vibration when a charging voltage, a charging current, and/or a charging frequency are applied in relation to charging the battery 189. The vibration generated through the inductor 311 may be transferred to the motion sensor 330 disposed in an area of the charging circuit 310 via the charging circuit 310. According to an embodiment, the motion sensor 330 may malfunction based on the vibration generated through the inductor 311. According to an embodiment, the processor 120 may change the first charging frequency (e.g., about 832KHz) to a second charging frequency (e.g., about 1MHz) in response to execution of a program related to the motion sensor 330. For example, the second charging frequency may include a frequency having relatively lower charging efficiency than that of the first charging frequency when charging the battery 189. According to an embodiment, when charging the battery 189 based on the second charging frequency (e.g., about 1 MHz), a physical vibration may not occur in the inductor 311 connected between the charging circuit 310 and the battery 189. For example, because the physical vibration is detected to be lower than a configured threshold value, the motion sensor 330 may have difficulty in substantially detecting the physical vibration.

According to an embodiment, the electronic device 101 may change the first charging frequency (e.g., about 832KHz) to the second charging frequency (e.g., about 1MHz) in order to prevent the motion sensor 330 from malfunctioning even if charging efficiency is slightly reduced. In a situation in which a charging function is performed based on the first charging frequency, when execution of the program related to the motion sensor 330 is identified, the processor 301 may change the first charging frequency to the second charging frequency in order to prevent the motion sensor 330 from malfunctioning. The processor 301 may charge the battery 189 based on the second charging frequency.

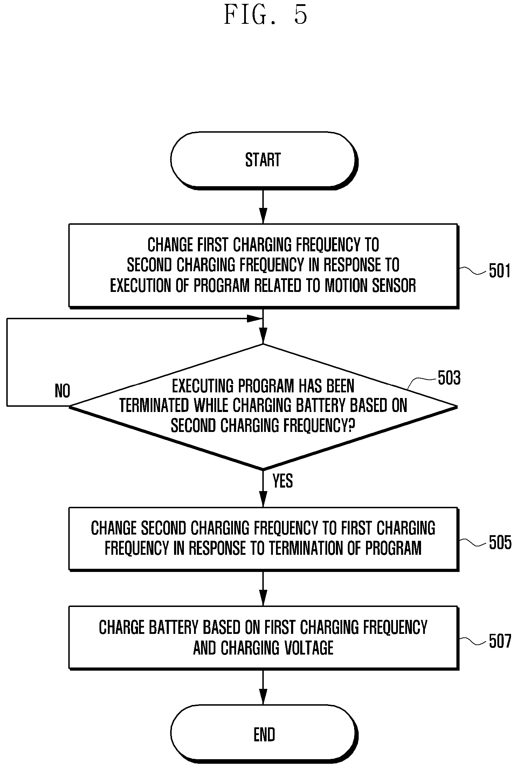

FIG. 5 is a flowchart illustrating a method of restoring an adjusted charging frequency to an existing charging frequency according to an embodiment of the disclosure.

Hereinafter, in embodiments, the respective operations may be performed sequentially, but are not necessarily performed sequentially. For example, the order of the respective operations may be changed, and at least two operations may be performed in parallel.

An electronic device 101 of FIG. 5 may be at least partially similar to the electronic device 101 of FIG. 1 or may further include other components of the electronic device 101.

With reference to FIG. 5, operation 501 may operate substantially the same as operation 405 of FIG. 4. In operation 501, the processor (e.g., the processor 301 of FIG. 3) of the electronic device 101 may change a first charging frequency to a second charging frequency in response to execution of a program related to the motion sensor (e.g., the motion sensor 330 of FIG. 3). Although not illustrated, in operation 501, the processor 120 may be in a state of charging the battery (e.g., the battery 189 of FIG. 3) based on the changed second charging frequency. For example, the second charging frequency may include a charging frequency of a level in which a physical vibration generating through the inductor (e.g., the inductor 311 of FIG. 3) when charging the battery 189 does not affect the motion sensor (e.g., the motion sensor 330 of FIG. 3).

In operation 503, the processor 301 may identify whether an executing program (e.g., a program related to the motion sensor 330) has been terminated while charging the battery 189 based on the second charging frequency. For example, the processor 301 may identify whether the motion sensor 330 has been changed from an activated state to a deactivated state. For example, in the case that the program related to the motion sensor 330 has been terminated, the processor 301 may restore the second charging frequency to the previous first charging frequency in operation 505. In the case that the program related to the motion sensor 330 has not been terminated in operation 503, the processor 301 may perform a charging function of the battery 189 while maintaining the second charging frequency as it is.

In operation 505, the processor 301 may change the second charging frequency to the first charging frequency in response to termination of the program. For example, the first charging frequency may include a charging frequency having relatively higher charging efficiency than that of the second charging frequency. According to an embodiment, as a program related to the motion sensor 330 is terminated, the motion sensor 330 may not be used, and because there is no concern about malfunction of the motion sensor 330, the electronic device 101 may consider preferentially charging efficiency and change the charging frequency to the first charging frequency having relatively higher charging efficiency than that of the second charging frequency.

In operation 507, the processor 301 may charge the battery 189 based on the first charging frequency and the charging voltage. According to an embodiment, the electronic device 101 may perform a charging function of the battery 189 based on the first charging frequency representing the maximum charging efficiency.

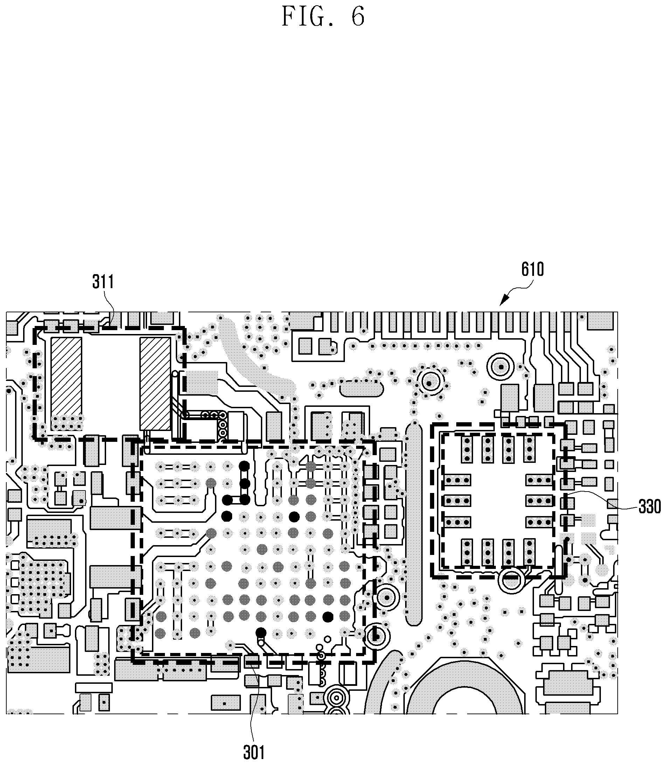

FIG. 6 is a diagram illustrating a disposition structure of an inductor and a motion sensor included in a charging circuit according to an embodiment of the disclosure.

An electronic device 101 of FIG. 6 may be at least partially similar to the electronic device 101 of FIG. 1 or may further include other components of the electronic device 101.

With reference to FIG. 6, a disposition structure in which at least some components of a plurality of components included in the electronic device 101 are disposed on a printed circuit board (PCB) 610 is illustrated. According to an embodiment, the processor (e.g., the processor 301 of FIG. 3) may include a control circuit of a power management module (e.g., the power management module 188 of FIG. 1, power management integrated circuit (PMIC)) that supplies power to the electronic device 101. The processor 301 of FIG. 6 may include a PMIC circuit.

According to an embodiment, in relation to performing a charging function, in the printed circuit board 610, a processor 301 for transmitting and receiving signals, a charging circuit (not illustrated) (e.g., the charging circuit 310 of FIG. 3) electrically connected to the processor 301 to perform a charging function, an inductor (e.g., the inductor 311 of FIG. 3) electrically connected to the charging circuit 310, and a battery (not illustrated) (e.g., the battery 189 of FIG. 3) electrically connected to the inductor 311 may be at least partially disposed. For example, the inductor 311 may be electrically connected to a switch node of the charging circuit 310 and be disposed between the charging circuit 310 and the battery 189 to supply a charging voltage and a charging current to the battery 189. The inductor 311 may at least partially generate physical vibrations when a charging voltage, a charging current, and/or a charging frequency are applied in relation to charging the battery 189. The vibrations generated through the inductor 311 may be transferred to the printed circuit board 610 and affect the motion sensor 330 at least partially disposed on the printed circuit board 610. For example, the motion sensor 330 may malfunction by performing a sensing operation based on physical vibrations (e.g., shaking) in the printed circuit board 610.

According to an embodiment, in the electronic device 101, various components may be disposed based on a limited area (e.g., an area where components may be disposed) in the printed circuit board 610, and structurally, the inductor 311 and the motion sensor 330 may be disposed close to each other. For example, the inductor 311 and the motion sensor 330 may be disposed substantially close to each other so that the physical vibration generated through the inductor 311 affects the motion sensor 330.

According to an embodiment, the electronic device 101 may charge the battery 189 based on a first charging frequency (e.g., about 832KHz) when charging the battery 189 based on charging power (e.g., AFC charging of about 9V, fast charging of about 15W) supplied from an external charging device. The processor 301 may supply a charging voltage and a charging current to the battery 189 through the inductor 311 based on the first charging frequency. For example, in the case that the first charging frequency is applied to the inductor 311, a physical vibration occurs based on the inductor 311. The physical vibration generated through the inductor 311 may be transferred to the motion sensor 330 disposed close to the inductor 311, and the motion sensor 330 may malfunction. For example, the motion sensor 330 may measure a sensing value corresponding to a physical vibration, and if the measured sensing value exceeds a configured threshold value, the motion sensor 330 may determine that a movement has occurred in the electronic device 101. For example, in the case that the sensing value corresponding to a physical vibration generated in the inductor 311 exceeds the configured threshold value based on the first charging frequency, the electronic device 101 may determine that the motion sensor 330 is malfunctioning.

According to an embodiment, in a situation in which the battery 189 is charged based on the first charging frequency (e.g., about 832 KHz), the processor 301 may identify execution of a program related to the motion sensor 330 and change the first charging frequency to a second charging frequency (e.g., about 1 MHz) in response to the execution of the program. For example, the second charging frequency may include a frequency having relatively lower charging efficiency than that of the first charging frequency when charging the battery 189. When charging the battery 189 based on the second charging frequency (e.g., about 1 MHz), a sensing value corresponding to the physical vibration generated in the inductor 311 may be the configured threshold value or less, and malfunction of the motion sensor 330 may be prevented.

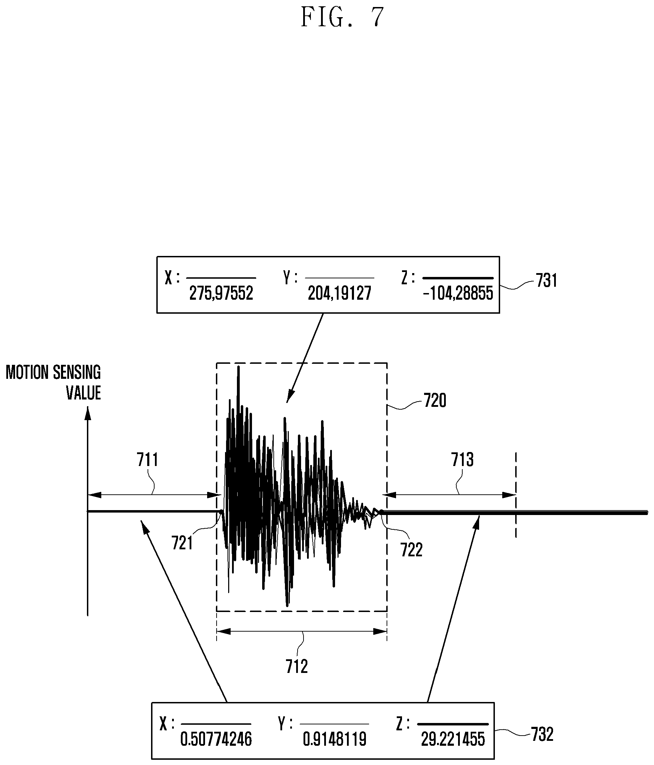

FIG. 7 is a graph illustrating an operation of adjusting a charging frequency in the case that a sensing value of a motion sensor exceeds a threshold value during a configured time according to an embodiment of the disclosure.

An electronic device 101 of FIG. 7 may be at least partially similar to the electronic device 101 of FIG. 1 or may further include other components of the electronic device 101.

According to an embodiment, the electronic device 101 may charge the battery (e.g., the battery 189 of FIG. 3) based on the configured charging voltage and configured charging current in a state of receiving charging power from an external device (e.g., charging device). For example, the electronic device 101 may be in a state to be connected to an external charging device that supports adaptive fast charging (AFC) (fast charging of about 15W) with a charging voltage of about 9V. The electronic device 101 may be in a state of charging the battery 189 based on charging power supplied from the external charging device and a first charging frequency. For example, the first charging frequency may include a charging frequency (e.g., about 832KHz) representing the maximum charging efficiency based on the configured charging voltage and configured charging current. According to an embodiment, the electronic device 101 may configure a first charging frequency (e.g., about 832 KHz) having relatively high charging efficiency in a process of performing a charging (e.g., fast charging) operation through an external charging device, and charge the battery 189 based on the first charging frequency.

FIG. 7 is a graph illustrating an activated motion sensor (e.g., the motion sensor 330 of FIG. 3) and motion sensing values measured using the activated motion sensor 330. For example, the motion sensor 330 may be in a state activated in a first section 711, a second section 712, and a third section 713.

With reference to FIG. 7, in the second section 712, the processor 301 may identify a first sensing value 731 through the motion sensor 330. For example, the first sensing value 731 may exceed a configured threshold value. The first sensing value 731 may include numerical data of a movement of the electronic device 101 along three axes (e.g., x-axis, y-axis, z-axis) based on the electronic device 101. The first sensing value 731 may include an x-sensing value (e.g., about 275 degrees) corresponding to the x-axis, a y-sensing value (e.g., about 204 degrees) corresponding to the y-axis, and a z-sensing value (e.g., about -104 degrees) corresponding to the z-axis. For example, in the case that at least one of sensing values included in the first sensing value 731 exceeds a configured threshold value, the processor 301 may determine that the first sensing value 731 has exceeded the configured threshold value. According to an embodiment, the electronic device 101 may be in a state of performing an adaptive fast charging (AFC) (e.g., fast charging of about 15W) function having a charging voltage of about 9V based on the first charging frequency in the second section 712. According to an embodiment, in the case that fast charging of about 15W is performed based on the first charging frequency, a physical vibration may occur in the inductor (e.g., the inductor of FIG. 3) included in the charging circuit (e.g., the charging circuit of FIG. 3) of the electronic device 101. For example, the physical vibration generated through the inductor 311 may be transferred to the printed circuit board (PCB) in which the inductor 311 is disposed and be transferred to the motion sensor 330 disposed in the PCB. As in the second section 712 in FIG. 7, the motion sensor 330 may measure the first sensing value 731 based on the physical vibration generated through the inductor 311. In the second section 712 of FIG. 7, the motion sensor 330 may be in a malfunctioning state.

With reference to FIG. 7, in the first section 711 and the third section 713, the processor 301 may identify a second sensing value 732 through the motion sensor 330. For example, the second sensing value 732 may not exceed the configured threshold value. The second sensing value 732 may include an x-sensing value (e.g., about 0.5 degrees) corresponding to the x-axis, a y-sensing value (e.g., about 0.9 degrees) corresponding to the y-axis, and a z-sensing value (e.g., about 29 degrees) corresponding to the z-axis. According to an embodiment, in the first section 711 and the third section 713 of FIG. 7, the motion sensor 330 may be in a normal operating state.

With reference to FIG. 7, in the first section 711, the electronic device 101 may be in a state of performing an adaptive fast charging (AFC) (e.g., fast charging of about 15W) function with a charging voltage of about 9V based on the first charging frequency. The processor 301 of the electronic device 101 may identify a first sensing value 731 through the motion sensor 330 as in the second section 711 in a situation in which the motion sensor 330 is operating (e.g., activation). The processor 301 may identify whether the first sensing value 731 exceeds a configured threshold value (e.g., about 50 degrees). The processor 301 may identify a first time point 721 at which the first sensing value 731 exceeds a configured threshold value and change a first charging frequency (e.g., about 832KHz) to a second charging frequency (e.g., about 1MHz). For example, a first area 720 (e.g., the second section 712) of FIG. 7 may include a situation in which the electronic device 101 identifies a situation in which the motion sensor 330 malfunctions while performing fast charging of about 15W and changes the first charging frequency to the second charging frequency to charge the battery 189 based on the second charging frequency.

With reference to FIG. 7, the electronic device 101 may identify a second sensing value 732 through the motion sensor 330 in a state of performing fast charging of about 15W based on the second charging frequency. For example, the second sensing value 732 may include a sensing value corresponding to a second time point 722 lowered to a configured threshold value or less. The processor 301 may identify whether the second sensing value 732 through the motion sensor 330 remains the configured threshold value or less during a configured time (e.g., about 10 seconds) based on the second time point 722. In the case that the second sensing value 732 is the configured threshold value or less during a configured time (e.g., about 10 seconds), the processor 301 may determine a situation in which the motion sensor 330 operates normally. In response to a situation in which the motion sensor 330 operates normally, the processor 301 may change the second charging frequency to the first charging frequency and charge the battery 189 based on the first charging frequency. According to an embodiment, the electronic device 101 may identify a situation in which the motion sensor 330 operates normally and charge the battery 189 based on the first charging frequency representing relatively high charging efficiency in response to the situation in which the motion sensor 330 operates normally.

According to an embodiment, the electronic device 101 may identify a charging frequency at which a physical vibration occurs through the inductor 311 and a charging frequency at which the motion sensor 330 malfunctions due to the physical vibration through experiments (e.g., tests) in a design process, and store the identified charging frequency (e.g., first charging frequency (e.g., about 832KHz)) in the memory (e.g., the memory 130 of FIG. 3). The electronic device 101 may identify a charging frequency at which the motion sensor 330 operates normally, and store the identified charging frequency (e.g., second charging frequency (e.g., about 1 MHz)) in the memory 130. For example, the second charging frequency may be a charging frequency representing relatively lower charging efficiency than that of the first charging frequency. According to an embodiment, the electronic device 101 may identify a first sensing value 731 through the motion sensor 330 in a state of performing fast charging of about 15W based on the first charging frequency. The processor 301 of the electronic device 101 may change the first charging frequency to the second charging frequency in response to a situation in which the motion sensor 330 malfunctions based on charging related information 320 stored in the memory 130. According to an embodiment, the electronic device 101 may change the first charging frequency to the second charging frequency in order to prevent the motion sensor 330 from malfunctioning in a state of performing a charging function based on the first charging frequency.

According to an embodiment, the electronic device 101 may identify a type of an external device (e.g., charging device) and determine a charging frequency based on the identified type of the external device. For example, when a travel adapter (TA) is connected to the electronic device 101, the processor 301 may identify the connection of the TA and charge the battery 189 based on the first charging frequency (e.g., about 832KHz). For example, a user's use pattern related to the use of the electronic device 101 may be stored in the memory 130. The use pattern may include a pattern in which the electronic device 101 is left unattended when performing a charging function through the TA. According to an embodiment, the processor 301 may charge the battery 189 based on the first charging frequency in response to performing a charging function through the TA based on the use pattern stored in the memory 130. According to an embodiment, when performing a charging function through the TA, the electronic device 101 may consider preferentially charging efficiency to charge the battery 189 based on a first charging frequency representing relatively high charging efficiency.

For another example, when an auxiliary battery is connected to the electronic device 101, the processor 301 may identify the connection of the auxiliary battery and charge the battery 189 based on the second charging frequency (e.g., about 1MHz). For example, a use pattern stored in the memory 130 may include a pattern in which the electronic device 101 executes various programs when performing a charging function through the auxiliary battery. According to an embodiment, the processor 301 may charge the battery 189 based on the second charging frequency in response to performing the charging function through the auxiliary battery based on the use pattern stored in the memory 130. According to an embodiment, when performing the charging function through the auxiliary battery, the electronic device 101 may consider preferentially to prevent malfunction of the motion sensor 330 to charge the battery 189 based on the second charging frequency. The electronic device 101 may charge the battery 189 based on the second charging frequency even if charging efficiency is relatively low when performing a charging function through the auxiliary battery.

A method of charging a battery according to an embodiment may include controlling a charging circuit (e.g., the charging circuit 310 of FIG. 3) to perform a charging function of a battery (e.g., the battery 189 of FIG. 3) based on a first charging frequency. According to an embodiment, the method may include identifying execution of at least one of a function related to a motion sensor, an instruction related to the motion sensor, or an application including the instruction. According to an embodiment, the method may include changing the first charging frequency to the second charging frequency in response to identification of the execution. According to an embodiment, the method may include controlling the charging circuit 310 to perform a charging function of the battery 189 based on the second charging frequency.

A method according to an embodiment may include receiving charging power for charging the battery 189 from an external electronic device; identifying a charging voltage and a charging current corresponding to received charging power based on charging related information 320 stored in the memory 130; and determining the first charging frequency based on the identified charging voltage and charging current.

According to an embodiment, the first charging frequency among at least one charging frequency stored in the memory 130 may include a charging frequency representing highest charging efficiency in a situation in which the battery 189 is charged based on the identified charging voltage and charging current.

According to an embodiment, the second charging frequency among the at least one charging frequency stored in the memory 130 may include a charging frequency representing relatively lower charging efficiency than that of the first charging frequency.

A method according to an embodiment may further include identifying termination of a function and an application in a state of performing the charging function based on the second charging frequency; changing the second charging frequency to the first charging frequency in response to termination of the function and the application; and charging the battery 189 based on the first charging frequency.

According to an embodiment, the inductor 311 at least partially disposed in a substrate member in which the motion sensor 330 is disposed may generate a physical vibration in response to performing a charging function based on the first charging frequency.

A method according to an embodiment may further include identifying a sensing value of the motion sensor 330 corresponding to a physical vibration generated through the inductor 311 using at least one of an acceleration sensor or a gyro sensor included in the motion sensor 330.

A method according to an embodiment may further include, when performing a charging function based on the first charging frequency, identifying a first sensing value based on the motion sensor 330, identifying whether the identified first sensing value exceeds a configured threshold value, and changing the first charging frequency to a second charging frequency in the case that the identified first sensing value exceeds the configured threshold value.

A method according to an embodiment may further include, when performing a charging function based on a second charging frequency, identifying a second sensing value based on the motion sensor 330, identifying whether the identified second sensing value remains a configured threshold value or less during a configured time, and changing the second charging frequency to the first charging frequency in the case that the identified second sensing value remains a configured threshold value or less.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 101, comprising:

   a charging circuit 310 configured to charge a battery 189;
   a motion sensor 330;
   a memory 130; and
   a processor 301 operatively connected to the charging circuit 310, the motion sensor 330, and the memory 130, wherein the processor 301 is configured to:

   control the charging circuit 310 to perform a charging function of the battery 189 based on a first charging frequency,
   change the first charging frequency to a second charging frequency in response to execution, when at least one of a function related to the motion sensor 330, an instruction related to the motion sensor 330, or an application including the instruction is executed, and
   control the charging circuit 310 to perform a charging function of the battery 189 based on the second charging frequency.

2. The electronic device of claim 1, wherein the processor 301 is configured to:

receive charging power for charging the battery 189 from an external electronic device connected to the electronic device 101,

identify a charging voltage and a charging current corresponding to the received charging power based on charging related information 320 stored in the memory 130, and

determine the first charging frequency based on the identified charging voltage and charging current.

3. The electronic device of claim 1 or 2, wherein the charging related information 320 comprises at least one of the charging power, the charging voltage and the charging current determined based on the charging power, or at least one charging frequency determined based on the charging voltage and the charging current.

4. The electronic device of any one of claims 1 to 3, wherein the first charging frequency among the at least one charging frequency stored in the memory 130 represents highest charging efficiency in a situation in which the battery 189 is charged based on the identified charging voltage and charging current, and

the second charging frequency among the at least one charging frequency stored in the memory 130 represents relatively lower charging efficiency than that of the first charging frequency.

5. The electronic device of any one of claims 1 to 4, wherein the processor 301 is configured to:

identify termination of the function and the application in a state of performing the charging function based on the second charging frequency,

change the second charging frequency to the first charging frequency in response to termination of the function and the application, and

charge the battery 189 based on the first charging frequency.

6. The electronic device of claim 1, further comprising an inductor 311 at least partially disposed in a substrate member in which the motion sensor 330 is disposed and related to the charging function,

wherein the inductor 311 generates a physical vibration in response to performing the charging function based on the first charging frequency.

7. The electronic device of any one of claims 1 to 6, wherein the motion sensor 330 comprises an acceleration sensor and a gyro sensor, and

the processor 301 is configured to identify a sensing value of the motion sensor 330 corresponding to the physical vibration generated through the inductor 311 using the motion sensor 330.

8. The electronic device of any one of claims 1 to 7, wherein the processor 120 is configured to:

identify a first sensing value based on the motion sensor 330 when performing the charging function based on the first charging frequency,

identify whether the identified first sensing value exceeds a configured threshold value, and

change the first charging frequency to a second charging frequency in the case that the identified first sensing value exceeds a configured threshold value.

9. The electronic device of any one of claims 1 to 8, wherein the processor 301 is configured to:

identify a second sensing value based on the motion sensor 330 when performing the charging function based on the second charging frequency,

identify whether the identified second sensing value remains a configured threshold value or less during a configured time, and

change the second charging frequency to the first charging frequency in the case that the identified second sensing value remains a configured threshold value or less.

10. The electronic device of claim 1, wherein the processor 301 is configured to:

perform the charging function based on the first charging frequency in the case of receiving charging power from a terminal adapter (TA) connected to the electronic device 101, and

perform the charging function based on the second charging frequency in the case of receiving charging power from an auxiliary battery connected to the electronic device 101.

11. The electronic device of any one of claims 1 to 10, wherein the processor 301 is configured to perform a fast charging function of about 15W based on one of the first charging frequency and the second charging frequency.

12. A method of charging a battery, the method comprising:

controlling a charging circuit 310 to perform a charging function of a battery 189 based on a first charging frequency;
identifying execution of at least one of a function related to a motion sensor 330, an instruction related to the motion sensor 330, or an application including the instruction;
changing the first charging frequency to the second charging frequency in response to identification of the execution; and
controlling the charging circuit 310 to perform a charging function of the battery 189 based on the second charging frequency.

13. The method of claim 12, further comprising:

receiving charging power for charging the battery 189 from an external electronic device;
identifying a charging voltage and a charging current corresponding to the received charging power based on charging related information 320 stored in the memory 130; and
determining the first charging frequency based on the identified charging voltage and charging current.

14. The method of claim 12 or 13, wherein the first charging frequency among at least one charging frequency stored in the memory 130 comprises a charging frequency representing highest charging efficiency in a situation in which the battery 189 is charged based on the identified charging voltage and charging current, and
the second charging frequency among the at least one charging frequency stored in the memory 130 comprises a charging frequency representing relatively lower charging efficiency than that of the first charging frequency.

15. The method of any one of claims 12 to 14, further comprising:

identifying termination of the function and the application in a state of performing the charging function based on the second charging frequency;
changing the second charging frequency to the first charging frequency in response to termination of the function and the application; and
charging the battery 189 based on the first charging frequency.

# FIG. 1

ELECTRONIC DEVICE 101

INPUT MODULE 150

SOUND OUTPUT MODULE 155

BATTERY 189

POWER MANAGEMENT MODULE 188

DISPLAY MODULE 160

MEMORY 130
VOLATILE MEMORY 132
NON-VOLATILE MEMORY 134
INTERNAL MEMORY 136
EXTERNAL MEMORY 138

PROCESSOR 120
MAIN PROCESSOR 121
AUXILIARY PROCESSOR 123

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTION TERMINAL 178

100

PROGRAM 140
APPLICATION 146
MIDDLEWARE 144
OPERATING SYSTEM 142

SECOND NETWORK 199

ELECTRONIC DEVICE 104

FIRST NETWORK 198

ELECTRONIC DEVICE 102

SERVER 108

EP 4 583 357 A1

20

FIG. 2

200

188

### POWER MANAGEMENT MODULE

| CHARGING CIRCUIT | 210 |

| POWER REGULATOR | 220 |

| FUEL GAUGE | 230 |

189

### BATTERY

| BATTERY PROTECTION CIRCUIT | 240 |

# FIG. 3

# FIG. 4

```
                    ┌──────────────┐
                    │    START     │
                    └──────┬───────┘
                           │
                           ▼
    ┌──────────────────────────────────────────────┐
    │   IDENTIFY CHARGING SITUATION OF BATTERY BASED ON   │
    │   FIRST CHARGING FREQUENCY AND CHARGING VOLTAGE     │──401
    └──────────────────────┬───────────────────────┘
                           │
                           ▼
    ┌──────────────────────────────────────────────┐
    │  IDENTIFY EXECUTION OF PROGRAM RELATED TO MOTION SENSOR  │
    │     IN SITUATION IN WHICH BATTERY IS CHARGING        │──403
    └──────────────────────┬───────────────────────┘
                           │
                           ▼
    ┌──────────────────────────────────────────────┐
    │ CHANGE FIRST CHARGING FREQUENCY TO SECOND CHARGING FREQUENCY │
    │        IN RESPONSE TO EXECUTION OF PROGRAM           │──405
    └──────────────────────┬───────────────────────┘
                           │
                           ▼
    ┌──────────────────────────────────────────────┐
    │   CHARGE BATTERY BASED ON SECOND CHARGING FREQUENCY  │
    │              AND CHARGING VOLTAGE                   │──407
    └──────────────────────┬───────────────────────┘
                           │
                           ▼
                    ┌──────────────┐
                    │     END      │
                    └──────────────┘
```

# FIG. 5

```
                    ┌─────────────────┐
                    │      START      │
                    └─────────────────┘
                             │
                             ▼
        ┌──────────────────────────────────────────┐
        │   CHANGE FIRST CHARGING FREQUENCY TO      │
        │ SECOND CHARGING FREQUENCY IN RESPONSE TO  │──── 501
        │ EXECUTION OF PROGRAM RELATED TO MOTION SENSOR │
        └──────────────────────────────────────────┘
                             │
                             ▼
              ╱────────────────────────────╲
             ╱  EXECUTING PROGRAM HAS BEEN   ╲──── 503
    NO ─────⟨  TERMINATED WHILE CHARGING BATTERY BASED ON ⟩
             ╲  SECOND CHARGING FREQUENCY?  ╱
              ╲────────────────────────────╱
                             │ YES
                             ▼
        ┌──────────────────────────────────────────┐
        │ CHANGE SECOND CHARGING FREQUENCY TO FIRST CHARGING │──── 505
        │ FREQUENCY IN RESPONSE TO TERMINATION OF PROGRAM │
        └──────────────────────────────────────────┘
                             │
                             ▼
        ┌──────────────────────────────────────────┐
        │ CHARGE BATTERY BASED ON FIRST CHARGING FREQUENCY │──── 507
        │           AND CHARGING VOLTAGE            │
        └──────────────────────────────────────────┘
                             │
                             ▼
                    ┌─────────────────┐
                    │       END       │
                    └─────────────────┘
```

# FIG. 6

FIG. 7

# EP 4 583 357 A1

## INTERNATIONAL SEARCH REPORT

| | International application No. |
|---|---|
| | **PCT/KR2023/015329** |

### A. CLASSIFICATION OF SUBJECT MATTER

**H02J 7/00**(2006.01)i; **H02J 7/04**(2006.01)i; **H02J 7/34**(2006.01)i; **G06F 3/041**(2006.01)i; **G01P 15/00**(2006.01)i; **G01C 19/02**(2006.01)i; **H01M 10/44**(2006.01)i

According to International Patent Classification (IPC) or to both national classification and IPC

### B. FIELDS SEARCHED

Minimum documentation searched (classification system followed by classification symbols)

H02J 7/00(2006.01); B60L 11/18(2006.01); B60L 5/00(2006.01); G01K 1/02(2006.01); G06F 3/0346(2013.01); G06F 3/0354(2013.01); H02J 50/12(2016.01); H02J 50/90(2016.01); H02J 7/02(2006.01); H04M 1/725(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 충전(charging), 주파수(frequency), 인덕터(inductor), 진동(vibration), 모션 센서 (motion sensor)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0042401 A (SAMSUNG ELECTRONICS CO., LTD.) 24 April 2019 (2019-04-24)<br>See paragraphs [0015]-[0131]; claims 1-20; and figures 1a-7. | 1-15 |
| A | JP 2018-121388 A (TOYOTA MOTOR CORPORATION) 02 August 2018 (2018-08-02)<br>See paragraphs [0020]-[0100]; claims 1-6; and figures 1-11. | 1-15 |
| A | US 2020-0287426 A1 (GOOGLE LLC) 10 September 2020 (2020-09-10)<br>See paragraphs [0036]-[0105]; claims 1-20; and figures 1-9. | 1-15 |
| A | US 2017-0136897 A1 (NEXTEV USA, INC.) 18 May 2017 (2017-05-18)<br>See paragraphs [0043]-[0182]; claims 1-20; and figures 1-32. | 1-15 |
| A | KR 10-2019-0099923 A (SAMSUNG ELECTRONICS CO., LTD.) 28 August 2019 (2019-08-28)<br>See paragraphs [0016]-[0130]; claims 1-20; and figures 1-8. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 January 2024** | **12 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

27

## INTERNATIONAL SEARCH REPORT
### Information on patent family members

International application No.

**PCT/KR2023/015329**

| Patent document cited in search report | | | Publication date (day/month/year) | Patent family member(s) | | | Publication date (day/month/year) |
|---|---|---|---|---|---|---|---|
| KR | 10-2019-0042401 | A | 24 April 2019 | KR | 10-2434405 | B1 | 22 August 2022 |
| | | | | US | 11411432 | B2 | 09 August 2022 |
| | | | | US | 2020-0313460 | A1 | 01 October 2020 |
| | | | | WO | 2019-078511 | A1 | 25 April 2019 |
| JP | 2018-121388 | A | 02 August 2018 | CN | 108347087 | A | 31 July 2018 |
| | | | | CN | 108347087 | B | 10 August 2021 |
| | | | | EP | 3351423 | A1 | 25 July 2018 |
| | | | | EP | 3351423 | B1 | 22 September 2021 |
| | | | | JP | 6565943 | B2 | 28 August 2019 |
| | | | | KR | 10-2018-0087166 | A | 01 August 2018 |
| | | | | KR | 10-2230057 | B1 | 19 March 2021 |
| | | | | US | 10523067 | B2 | 31 December 2019 |
| | | | | US | 2018-0212477 | A1 | 26 July 2018 |
| US | 2020-0287426 | A1 | 10 September 2020 | CN | 113544935 | A | 22 October 2021 |
| | | | | EP | 3906602 | A1 | 10 November 2021 |
| | | | | WO | 2020-180352 | A1 | 10 September 2020 |
| US | 2017-0136897 | A1 | 18 May 2017 | CN | 110167815 | A | 23 August 2019 |
| | | | | CN | 110167815 | B | 08 February 2022 |
| | | | | CN | 110382481 | A | 25 October 2019 |
| | | | | EP | 3541806 | A1 | 25 September 2019 |
| | | | | EP | 3541806 | A4 | 01 July 2020 |
| | | | | JP | 2020-502066 | A | 23 January 2020 |
| | | | | US | 10032319 | B2 | 24 July 2018 |
| | | | | US | 10059213 | B2 | 28 August 2018 |
| | | | | US | 10071641 | B2 | 11 September 2018 |
| | | | | US | 10076960 | B2 | 18 September 2018 |
| | | | | US | 10080318 | B2 | 18 September 2018 |
| | | | | US | 10093195 | B2 | 09 October 2018 |
| | | | | US | 10124690 | B2 | 13 November 2018 |
| | | | | US | 10131238 | B2 | 20 November 2018 |
| | | | | US | 10160339 | B2 | 25 December 2018 |
| | | | | US | 10166875 | B2 | 01 January 2019 |
| | | | | US | 10183584 | B2 | 22 January 2019 |
| | | | | US | 10189363 | B2 | 29 January 2019 |
| | | | | US | 10209981 | B2 | 19 February 2019 |
| | | | | US | 10220717 | B2 | 05 March 2019 |
| | | | | US | 10252631 | B2 | 09 April 2019 |
| | | | | US | 10262469 | B2 | 16 April 2019 |
| | | | | US | 10275797 | B2 | 30 April 2019 |
| | | | | US | 10304261 | B2 | 28 May 2019 |
| | | | | US | 10336194 | B2 | 02 July 2019 |
| | | | | US | 10354460 | B2 | 16 July 2019 |
| | | | | US | 10388081 | B2 | 20 August 2019 |
| | | | | US | 10395440 | B2 | 27 August 2019 |
| | | | | US | 10410250 | B2 | 10 September 2019 |
| | | | | US | 10427530 | B2 | 01 October 2019 |
| | | | | US | 10430833 | B2 | 01 October 2019 |
| | | | | US | 10515390 | B2 | 24 December 2019 |
| | | | | US | 10532663 | B2 | 14 January 2020 |
| | | | | US | 10556599 | B2 | 11 February 2020 |

Form PCT/ISA/210 (patent family annex) (July 2022)

## INTERNATIONAL SEARCH REPORT
Information on patent family members

International application No.

**PCT/KR2023/015329**

| Patent document cited in search report | Publication date (day/month/year) | Patent family member(s) | | | Publication date (day/month/year) |
|---|---|---|---|---|---|
| | | US | 10586254 | B2 | 10 March 2020 |
| | | US | 10604020 | B2 | 31 March 2020 |
| | | US | 10604120 | B2 | 31 March 2020 |
| | | US | 10611251 | B2 | 07 April 2020 |
| | | US | 10632852 | B2 | 28 April 2020 |
| | | US | 10672060 | B2 | 02 June 2020 |
| | | US | 10679276 | B2 | 09 June 2020 |
| | | US | 10685503 | B2 | 16 June 2020 |
| | | US | 10699305 | B2 | 30 June 2020 |
| | | US | 10699326 | B2 | 30 June 2020 |
| | | US | 10753761 | B2 | 25 August 2020 |
| | | US | 10762553 | B2 | 01 September 2020 |
| | | US | 10807966 | B2 | 20 October 2020 |
| | | US | 10949885 | B2 | 16 March 2021 |
| | | US | 10970746 | B2 | 06 April 2021 |
| | | US | 11005657 | B2 | 11 May 2021 |
| | | US | 11034335 | B2 | 15 June 2021 |
| | | US | 11710153 | B2 | 25 July 2023 |
| | | US | 2017-0136880 | A1 | 18 May 2017 |
| | | US | 2017-0136881 | A1 | 18 May 2017 |
| | | US | 2017-0136882 | A1 | 18 May 2017 |
| | | US | 2017-0136883 | A1 | 18 May 2017 |
| | | US | 2017-0136885 | A1 | 18 May 2017 |
| | | US | 2017-0136887 | A1 | 18 May 2017 |
| | | US | 2017-0136888 | A1 | 18 May 2017 |
| | | US | 2017-0136889 | A1 | 18 May 2017 |
| | | US | 2017-0136890 | A1 | 18 May 2017 |
| | | US | 2017-0136891 | A1 | 18 May 2017 |
| | | US | 2017-0136892 | A1 | 18 May 2017 |
| | | US | 2017-0136893 | A1 | 18 May 2017 |
| | | US | 2017-0136894 | A1 | 18 May 2017 |
| | | US | 2017-0136895 | A1 | 18 May 2017 |
| | | US | 2017-0136896 | A1 | 18 May 2017 |
| | | US | 2017-0136902 | A1 | 18 May 2017 |
| | | US | 2017-0136903 | A1 | 18 May 2017 |
| | | US | 2017-0136904 | A1 | 18 May 2017 |
| | | US | 2017-0136905 | A1 | 18 May 2017 |
| | | US | 2017-0136907 | A1 | 18 May 2017 |
| | | US | 2017-0136908 | A1 | 18 May 2017 |
| | | US | 2017-0136910 | A1 | 18 May 2017 |
| | | US | 2017-0136911 | A1 | 18 May 2017 |
| | | US | 2017-0136912 | A1 | 18 May 2017 |
| | | US | 2017-0138758 | A1 | 18 May 2017 |
| | | US | 2017-0140349 | A1 | 18 May 2017 |
| | | US | 2017-0140603 | A1 | 18 May 2017 |
| | | US | 2017-0141368 | A1 | 18 May 2017 |
| | | US | 2017-0142872 | A1 | 18 May 2017 |
| | | US | 2017-0174205 | A1 | 22 June 2017 |
| | | US | 2018-0009321 | A1 | 11 January 2018 |
| | | US | 2018-0009326 | A1 | 11 January 2018 |

Form PCT/ISA/210 (patent family annex) (July 2022)

## INTERNATIONAL SEARCH REPORT
### Information on patent family members

| International application No. |
|---|
| **PCT/KR2023/015329** |

| Patent document cited in search report | Publication date (day/month/year) | Patent family member(s) | | | Publication date (day/month/year) |
|---|---|---|---|---|---|
| | | US | 2018-0009327 | A1 | 11 January 2018 |
| | | US | 2018-0009330 | A1 | 11 January 2018 |
| | | US | 2018-0009418 | A1 | 11 January 2018 |
| | | US | 2018-0009446 | A1 | 11 January 2018 |
| | | US | 2018-0011173 | A1 | 11 January 2018 |
| | | US | 2018-0011483 | A1 | 11 January 2018 |
| | | US | 2018-0012004 | A1 | 11 January 2018 |
| | | US | 2018-0012048 | A1 | 11 January 2018 |
| | | US | 2018-0012089 | A1 | 11 January 2018 |
| | | US | 2018-0012091 | A1 | 11 January 2018 |
| | | US | 2018-0012196 | A1 | 11 January 2018 |
| | | US | 2018-0012197 | A1 | 11 January 2018 |
| | | US | 2018-0012198 | A1 | 11 January 2018 |
| | | US | 2018-0012224 | A1 | 11 January 2018 |
| | | US | 2018-0012273 | A1 | 11 January 2018 |
| | | US | 2018-0012279 | A1 | 11 January 2018 |
| | | US | 2018-0012424 | A1 | 11 January 2018 |
| | | US | 2018-0012425 | A1 | 11 January 2018 |
| | | US | 2018-0012426 | A1 | 11 January 2018 |
| | | US | 2018-0012427 | A1 | 11 January 2018 |
| | | US | 2018-0012433 | A1 | 11 January 2018 |
| | | US | 2018-0013211 | A1 | 11 January 2018 |
| | | US | 2018-0141544 | A1 | 24 May 2018 |
| | | US | 2018-0141545 | A1 | 24 May 2018 |
| | | US | 2018-0141562 | A1 | 24 May 2018 |
| | | US | 2018-0141568 | A1 | 24 May 2018 |
| | | US | 2018-0143035 | A1 | 24 May 2018 |
| | | US | 2018-0143298 | A1 | 24 May 2018 |
| | | US | 2018-0143639 | A1 | 24 May 2018 |
| | | US | 2018-0143818 | A1 | 24 May 2018 |
| | | US | 2018-0144369 | A1 | 24 May 2018 |
| | | US | 2019-0284157 | A1 | 19 September 2019 |
| | | US | 2019-0347873 | A1 | 14 November 2019 |
| | | US | 2021-0182911 | A1 | 17 June 2021 |
| | | US | 2021-0201357 | A1 | 01 July 2021 |
| | | US | 9694685 | B2 | 04 July 2017 |
| | | US | 9944192 | B2 | 17 April 2018 |
| | | US | 9946906 | B2 | 17 April 2018 |
| | | US | 9964415 | B2 | 08 May 2018 |
| | | US | 9984522 | B2 | 29 May 2018 |
| | | WO | 2017-083685 | A1 | 18 May 2017 |
| | | WO | 2017-083846 | A1 | 18 May 2017 |
| | | WO | 2017-083847 | A1 | 18 May 2017 |
| | | WO | 2017-083848 | A1 | 18 May 2017 |
| | | WO | 2017-083851 | A1 | 18 May 2017 |
| | | WO | 2018-009772 | A1 | 11 January 2018 |
| | | WO | 2018-009773 | A1 | 11 January 2018 |
| | | WO | 2018-009852 | A1 | 11 January 2018 |
| | | WO | 2018-094180 | A1 | 24 May 2018 |
| | | WO | 2018-094362 | A1 | 24 May 2018 |

Form PCT/ISA/210 (patent family annex) (July 2022)

**INTERNATIONAL SEARCH REPORT**
Information on patent family members

| International application No. |
| --- |
| **PCT/KR2023/015329** |

| Patent document cited in search report | Publication date (day/month/year) | Patent family member(s) | | | Publication date (day/month/year) |
| --- | --- | --- | --- | --- | --- |
| | | WO | 2018-094373 | A1 | 24 May 2018 |
| | | WO | 2018-094374 | A1 | 24 May 2018 |
| | | WO | 2018-094375 | A1 | 24 May 2018 |
| | | WO | 2018-094384 | A1 | 24 May 2018 |
| KR 10-2019-0099923 A | 28 August 2019 | KR | 10-2420251 | B1 | 14 July 2022 |
| | | US | 11392222 | B2 | 19 July 2022 |
| | | US | 2021-0034175 | A1 | 04 February 2021 |
| | | WO | 2019-164238 | A1 | 29 August 2019 |

Form PCT/ISA/210 (patent family annex) (July 2022)